(19) **Europäisches Patentamt**

**European Patent Office**

**Office européen des brevets**

(11) **EP 1 438 902 A1**

(12) **EUROPEAN PATENT APPLICATION**

(43) Date of publication:
**21.07.2004 Bulletin 2004/30**

(51) Int Cl.⁷: **A23L 1/09**, A23L 1/32,
A23P 1/16, A21D 13/08,
A21D 2/18

(21) Application number: **04001117.3**

(22) Date of filing: **20.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.01.2003 JP 2003010950**

(71) Applicant: **Kabushiki Kaisha Ueno Seiyaku Oyo
Kenkyujo
Osaka-shi Osaka-fu (JP)**

(72) Inventors:
• **Ueno, Ryuzo
Hyogo-ken (JP)**
• **Honda, Junya
Nishinomiya-shi, Hyogo-ken (JP)**
• **Arai, Sho
Nishinomiya-shi, Hyogo-ken (JP)**
• **Hasegawa, Shoko
Ashiya-shi, Hyogo-ken (JP)**

(74) Representative: **Albrecht, Thomas, Dr.
Kraus & Weisert
Patent- und Rechtsanwälte
Thomas-Wimmer-Ring 15
80539 München (DE)**

(54) **Egg foam stabilizing composition**

(57)    Provided is a sugar alcohol composition for the use of stabilizing egg form of aerated liquid egg, comprising 55-100 wt% of α-D-glucopyranosyl-1,6-sorbitol on a dry weight basis. The sugar alcohol composition can aid to provide fairly stable egg foam as well as food product manufactured using aerated liquid egg.

EP 1 438 902 A1

**Description**

FIELD OF THE INVENTION

The present invention relates to a sugar alcohol composition for the use of stabilizing egg foam. The present invention also relates to an egg product comprising the sugar alcohol composition, and food product made with the egg product. Further, the invention relates to a method for manufacturing an aerated egg product as well as a food product made with the stably aerated egg product.

ART RELATED

Eggs have the ability to incorporate air and form foam when beaten with a mechanical device. This foaming property of eggs is significant in egg white than in egg yolk. There are many food products utilizing the foaming property of egg white or whole egg. For example, food products obtained with aerated eggs such as sponge cake, chiffon cake, castella and meringue have unique taste and texture attributable to the egg foam. In manufacturing such food products as above, providing whipped eggs is very important for the quality. However, the difficulty in keeping the aerated state of eggs often deteriorates quality of the final products. For example, in whipped plain egg white, aggregation of air bubbles and drainage of liquid are observed within about 10 minutes standing and the smooth surface appearance becomes rough. Food products made with such deteriorated egg foam may have less volume and unpleasant texture.

Generally, emulsifiers such as monoglycerides are added to liquid egg to provide stable egg foam. However, there are some problems using the emulsifiers. In order to attain the desired stability, plural kinds of emulsifiers are required and their compounding ratio may vary depending on the food product to be manufactured, and handling of liquid or paste emulsifiers are difficult. Further, some customers simply detest food additives like emulsifiers.

Sucrose contributes to stabilize air bubbles incorporated in aerated eggs through its water-holding capacity and viscosity. However, the effect is not enough to maintain the egg foam in a fairly stable form. For example, egg foam containing sugar observed at 30 minutes after whipping is no difference from that containing no sugar, and the surface of the egg foam is relatively rough.

There are many attempts to provide stable egg foam and stable aerated food products made with the egg foam. For example, Japanese Patent Publication No. 2-18046 discloses an aerated confections comprising Palatinit® , or an equimolar mixture of $\alpha$-D-glucopyranosyl-1,6-sorbitol (isomaltitol) and $\alpha$-D-glucopyranosyl-1,1-mannitol, hydrogenated starch hydrolysate and a whipping agent. However the aerated egg containing Palatinit® is not enough stable. It may drain liquid within 30 minutes after whipping and the appearance may also be deteriorated within short time.

SUMMARY OF THE INVENTION

An object of the invention is to provide a composition for the use of stabilizing egg foam.

Further object of the present invention is to provide an egg product which can provide stable egg foam.

Further object of the present invention is to provide an aerated egg product of which foam is stable.

Still further object of the present invention is to provide a method for manufacturing the aerated egg product.

Further more, an object of the present invention is to provide an egg mixture for an aerated food product with stable and pleasant quality. Still further object of the present invention is to provide a food product with excellent texture and appearance as well as stable quality, and a method for manufacturing the same.

Accordingly, the present invention provides a sugar alcohol composition for the use of stabilizing foam of aerated eggs, comprising 55-100 wt% of $\alpha$-D-glucopyranosyl-1,6-sorbitol (hereinafter, referred as "GPS-6") on a dry weight basis. According to the present invention, the sugar alcohol composition may further comprise 45-0 wt% of a compound selected from the group consisting of $\alpha$-D-glucopyranosyl-1,1-mannitol (hereinafter, referred as "GPM"), $\alpha$-D-glucopyranosyl-1,1-sorbitol (hereinafter, referred as "GPS-1") and a mixture thereof on a dry weight basis.

According to the present invention, the sugar alcohol composition may be in any form including aqueous solution, powder, granule and syrup obtained by boil down the aqueous solution, and granular or powdery composition are especially preferable since they are easy to handle.

The sugar alcohol composition of the present invention may be added to liquid egg of egg white or whole egg, and the liquid egg may be any of fresh eggs, reconstituted dried eggs and thawed frozen eggs. The liquid egg containing the sugar alcohol composition of the present invention can provide fairly stable egg foam with excellent texture and appearance.

According to the present invention, the amount of the sugar alcohol composition to be added to liquid egg is not limited and the amount may preferably be 1-300 wt%, more preferably 1.25-250 wt% and especially 10-200 wt% of the wet amount of the liquid egg.

The present invention also provides egg product comprising eggs and the sugar alcohol composition of the present invention. The egg product may be liquid egg product, dried egg product or frozen egg product.

Further, the present invention provides a method for manufacturing aerated egg product comprising the steps of: providing liquid egg being admixed with the sugar alcohol composition of the present invention, and beating liquid egg. According to the present invention, the sugar alcohol composition of the present invention may be added to the liquid egg before or during beating the same.

The present invention also provides an egg mixture for manufacturing an aerated food product comprising the egg product of the present invention. In the present specification and claims, "egg mixture" represents an uncooked mixture for preparing a food product such as dough, paste and batter. According to the present invention, the egg mixture may comprises a grain powder such as flour, sweeteners other than sugar alcohols used in the present invention, fat and oils such as butter, margarine, shortening and vegetable oils. The egg mixture may further comprise any other ingredient added to a conventional food product obtained from aerated egg mixture, based on types and purpose of the product according to known proportions.

The present invention further provides an aerated food product manufactured with the aerated egg mixture comprising liquid egg and the sugar alcohol composition of the invention. Further more, the present invention provides a method for manufacturing an aerated food product which comprises the step of providing aerated egg mixture of the present invention. According to the present invention, the aerated egg mixture may be prepared by beating the ingredient containing liquid egg, and the sugar alcohol composition of the present invention may be added before or during the beating step. The method may further comprise the step of cooking, such as baking, steaming or boiling the aerated egg mixture.

Best Mode for Carrying Out the Invention

GPS-6 used in the present invention can be prepared by hydrogenating isomaltulose, which is obtained from sucrose by means of glucosyl transferase. It may be also prepared by hydrogenation of isomaltose, which is also obtained from sucrose. GPS-6 obtained from isomaltulose is preferable for economical reasons.

In addition to GPS-6, GPM is generated from isomaltulose. Further, hydrogenation of trehalulose, a byproduct of isomaltose from sugar, gives GPS-1. Therefore, GPS-6, GPM and GPS-1 can be prepared by hydrogenating a mixture of isomaltulose and trehalulose, which is obtained from sucrose by means of glucosyl transferase.

The sugar alcohol composition of the instant invention comprising GPS-6 and optionally GPS-1 and GPM in the specified proportions may be prepared from thus obtained mixture of GPS-6, GPM and GPS-1 by separating the respective compound by means of crystallization or chromatography, and then adjusting the proportions. The sugar alcohol composition may also be prepared from commercially available reduced isomaltulose product, such as Palatinit® (Shin Mitsui Sugar Co. Ltd., Tokyo, Japan) a product consisting essentially of approximately equimolar GPS-6 and GPM or IsoMaltidex® (Cerestar Japan Ltd., Tokyo, Japan), in the same manner as above. The sugar alcohol composition of the invention may be prepared by simply mixing commercially available GPS-6, GPM and GPS-1 to give the above-defined proportions.

The sugar alcohol composition of the present invention may further comprise one or more sugar alcohols other than GPS-6, GPM and GPS-1, for example, sorbitol and maltitol up to 10 wt% based on the total amount of the composition on a dry weight basis.

The sugar alcohol composition of the present invention alone can aid to provide fairly stable egg foam with excellent texture and appearance. However, it may be used, if desired, in combination with a conventional emulsifier such as monoglyceride or any other known foam stabilizing agent.

The sugar alcohol composition of the present invention may be provided in any form including solution, powder and granule, and granular or powdery composition are especially preferable since they are easy to handle. The composition may also be provided as syrup prepared by boiling down aqueous solution. The composition may easily be substituted with a part of conventionally used sweeteners. That is, according to the present invention, a conventional egg product, egg mixture or food product can be improved by substituting at least a part of sweeteners with a sugar alcohol composition of the present invention.

The amount of the sugar alcohol composition in liquid egg or egg product of the present invention is not specifically limited and may preferably be 1-300 wt%, more preferably 1.25-250 wt% and especially 10-200 wt% of the wet amount of the egg.

According to the present invention, liquid egg may be whole egg or egg white. Liquid egg may be those of fresh eggs, thawed frozen eggs as well as reconstituted dried eggs. When the composition is used with frozen eggs, the composition may be added either before freezing the eggs or after thawing the frozen egg. When the composition is used with dried eggs, the composition may be added either before drying the eggs or after reconstituting the dried egg, as well as dry blended with the dried egg. The present invention also provide egg product comprising the sugar alcohol composition of the present invention.

The egg product of the present invention may be liquid egg, frozen egg or dried egg. When the egg product is frozen egg or dried egg, the sugar alcohol composition of the present invention may be packaged with the frozen egg or dried egg to be added with the thawed egg/reconstituted egg before use.

Dried egg may be prepared by drying liquid egg in a conventional manner such as freeze drying, spray drying and pan drying. When the liquid egg is thawed frozen egg, the sugar alcohol composition of the present invention may be added before freezing the eggs. When the liquid egg is reconstituted dried egg, the sugar alcohol composition may be added before drying the eggs, dry blended with the dried egg or added into the reconstituted liquid egg.

The sugar alcohol composition of the present invention may also be used for stabilizing aerated egg mixture comprising liquid egg. The egg mixture may further comprise other ingredient conventionally used for preparing an aerated food product including grain powder, such as flour, other sweeteners such as sugar, and fat and oils.

The present invention also provides a food product obtained with liquid egg comprising the sugar alcohol composition of the present invention. The food product may be aerated food product obtained by baking aerated egg mixture of the present invention. The baked food product may be prepared by mixing the sugar alcohol composition with liquid egg, beating the mixture to give aerated egg and folding a powdery component such as flour and some other ingredients into the aerated egg. Alternatively, the food product of the invention may be prepared by mixing the whole ingredient including liquid egg and the sugar alcohol composition of the present invention and then beating the same to give aerated egg mixture. Either procedure can give fairly stable aerated egg mixture and also soft baked product with stable quality.

In addition, food product like meringue manufactured from egg white and sweeteners may be prepared by adding the sugar alcohol composition of the invention before or over beating egg white. The sugar alcohol composition may preferably be in the form of powder and/or syrup. Thus obtained meringue has fairly stable foam than those obtained with sucrose as the sole sweetener. In addition, by baking thus obtained meringue, larger volume with pleasant and mild texture baked meringue can be provided.

The present invention will be understood more readily with reference to the following examples. However, these examples are intended only to illustrate the invention and are not to be construed to limit the scope of the invention. In the following examples, "%" represent "wt%" except for otherwise specified.

Examples 1-4 and Comparative Examples 1-7

Effect on Stabilizing Egg Foam

Effects of various sugar alcohol compositions or other sweeteners on stabilizing egg foam were compared. Liquid drainage from egg foam, appearance (fineness of air bubbles), firmness and relative density of egg foam were examined. The sweeteners used are shown below. The results are average value of two trials.

Example 1: (GPS preparation 1)

GPS-6 55%, GMP 33%, GPS-1 5%, Sorbitol 6% and others 1%

Example 2: (GPS preparation 2)

GPS-6 59%, GPM 30%, GPS-1 4%, Sorbitol 6% and others 1%

Example 3: (GPS preparation 3)

GPS-6 70%, GPM 17%, GPS-1 6%, Sorbitol 6% and others 1%

Example 4: (GPS preparation 4)

GPS-6 100% (Wako Pure Chemical Industries, Ltd. Osaka, Japan)

Comparative Example 1:

No sweetener

Comparative Example 2

granulated sugar

Comparative Example 3

crystalline trehalose (Treha®, Hayashibara Co., Ltd. Okayama, Japan)

Comparative Example 4:

equimolar mixture of GPS-6 and GPM (Palatinit® , Shin Mitsui Sugar Co.,Ltd., Tokyo Japan)

Comparative Example 5: (GPM preparation 1)

GPS-6 9%, GPM 91%

Comparative Example 6:

Crystalline maltitole (Lesys® Towa Kaseikogyo, Tokyo, Japan)

Comparative Example 7:

Powdered sorbitol (Powdered Sorbitol-UENO®, Ueno fine chemicals Industry, Ltd., Osaka, Japan)

Evaluation of Liquid Drainage Rate

Method

Fresh egg white about 100g was put in a stainless bowl (opening diameter: 21cm) over water bath at 40°C to heat the egg to 33°C. The sweetener shown above, in an amount of 25% of the egg white, was added and the mixture was beaten for 2 minutes with the electric mixer (#MK-H3, Matsushita Electric Industries Co., Ltd. Osaka, Japan). The obtained egg white foam was stood at 25°C. Liquid drainage from the foam was collected by decantation at 30 and 60 minutes respectively, and the amount was measured. The liquid drainage rate was calculated by the formula below:

$$\text{Liquid Drainage Rate (\%)} = (\text{Liquid drainage (g)})/(\text{egg white (g)} + \text{sweeteners (g)}) .$$

The less the liquid drainage rate represents the more stable egg white foam.

Result

Results are shown in Table 1. The liquid drainage rates observed in Examples 1-4, or egg white foams admixed with the sugar alcohol composition of the invention, were lower and no drainage was observed at 30 minutes. In the comparative examples, liquid drainage was observed within 30 minutes after whipping the eggs. These results show that the sugar alcohol composition of the present invention has better foam stabilizing ability than the other sweeteners.

TABLE 1

| Liquid Drainage Rates | | |
|---|---|---|
| Sweeteners | Liquid Drainage Rate (%) | |
| | 30 min. | 60 min. |
| Example 1: GPS prep. 1 | 0.0 | 15.0 |
| Example 2: GPS prep. 2 | 0.0 | 14.2 |
| Example 3: GPS prep. 3 | 0.0 | 12.5 |
| Example 4: GPS prep. 4 | 0.0 | 13.8 |
| Comp. Ex. 1: none | 12.3 | 26.7 |
| Comp. Ex. 2: granulated sugar | 11.5 | 23.1 |

TABLE 1   (continued)

| Liquid Drainage Rates | | |
| --- | --- | --- |
| Sweeteners | Liquid Drainage Rate (%) | |
| | 30 min. | 60 min. |
| Comp. Ex. 3: trehalose | 5.7 | 25.4 |
| Comp. Ex. 4: PALATINIT® | 1.9 | 20.1 |
| Comp. Ex. 5: GPM prep. | 10.2 | 27.7 |
| Comp. Ex. 6: maltitol | 15.9 | 31.5 |
| Comp. Ex. 7: sorbitol | 12.9 | 20.4 |

Appearance and firmness of Egg White Foam

Method

Egg white foam prepared in the same manner as above was stood at 25°C and the surface of the foam was observed at 30 and 60 minutes. The appearance of the surface was evaluated by fineness of air bubbles according to the following criteria:

○: smooth surface appearance with fine air bubbles
∆ : slightly rough appearance with several large air bubbles
✕: rough appearance with many large air bubbles.

Egg white foam prepared in the same manner as above was stood at 25°C. At 30 and 60 minutes, slight press with stainless spatula was given to the foam to evaluate the firmness. The firmness was evaluated by the following criteria:

O : no mark was left after the press and felt that the spatula was pushed back
∆: a mark was left on the surface after the press
✕: air bubbles were broken by the press.

Result

Results are shown in Table 2. The effect of the sugar alcohol composition of the invention to keep the smooth appearance and the firmness of the foam was superior to the other sweeteners.

TABLE 2

| Foam appearance (fineness of air bubbles) and Firmness | | | | |
| --- | --- | --- | --- | --- |
| Sweeteners | Fineness | | Firmness | |
| | 30 min. | 60 min. | 30 min. | 60 min. |
| Example 1: GPS prep. 1 | ○ | ∆ | ○ | ○ |
| Example 2: GPS prep. 2 | ○ | ∆ | ○ | ∆ |
| Example 3: GPS prep. 3 | ○ | ∆ | ○ | ∆ |
| Example 4: GPS prep. 4 | ∆ | ∆ | ∆ | ∆ |
| Comp. Ex. 1: none | ✕ | ✕ | ✕ | ✕ |
| Comp. Ex. 2: granulated sugar | ∆ | ✕ | ∆ | ✕ |
| Comp. Ex. 3: trehalose | ∆ | ✕ | ✕ | ✕ |
| Comp. Ex. 4: PALATINIT® | ○ | ✕ | ○ | ✕ |
| Comp. Ex. 5: GPM prep. | ∆ | ✕ | ∆ | ✕ |

TABLE 2 (continued)

| Foam appearance (fineness of air bubbles) and Firmness | | | | |
|---|---|---|---|---|
| Sweeteners | Fineness | | Firmness | |
| | 30 min. | 60 min. | 30 min. | 60 min. |
| Comp. Ex. 6: maltitol | Δ | × | × | × |
| Comp. Ex. 7: sorbitol | × | × | × | × |

Examples 5-7

Foam stabilizing effect when used in combination with granulated sugar

In order to assess the foam stabilizing effect of sugar alcohol composition of Example 2 (GPS preparation 2) when used in combination with granulated sugar, liquid drainage from egg white foam was measured according to the same manner as above. The sweeteners in an amount of 25 % of the egg white was added to the liquid egg white. The sweeteners used in these examples were mixture of granulated sugar and GPS preparation 2. The proportions of the GPS prep. 2 in the sweeteners used in examples 5, 6 and 7 were adjusted to 50%, 17% and 5% respectively. The proportion of GPS prep. 2 is the value obtained by the formula:

$$\text{Proportion of GPS prep. 2 (\%)} = \text{GPS prep. 2 (g)} / (\text{granulated sugar(g)} + \text{GPS prep. 2(g)}) \times 100$$

Results are shown in Table 3. The sugar alcohol composition of the present invention was significantly improved stability of egg white foam than those obtained with granulated sugar alone. The improvement was observed when the granulated sugar was substituted with as low as 5% of the sugar alcohol composition.

TABLE 3

| Effect of the sugar alcohol composition in combination with granulated sugar | | | | |
|---|---|---|---|---|
| | proportion of GPS prep. 2 in the sweeteners (%) | Ratio of GPS prep. 2 to egg white (%) | liquid drainage rate(%) | |
| | | | 30 min. | 60 min. |
| Example 2 | 100 | 25.0 | 0.0 | 14.2 |
| Example 5 | 50 | 12.5 | 1.0 | 12.7 |
| Example 6 | 17 | 4.25 | 0.0 | 8.2 |
| Example 7 | 5 | 1.25 | 0.6 | 10.1 |
| Camp. Ex. 2 | 0 | 0.0 | 11.5 | 23.1 |

Example 8 and Comparative Examples 8 and 9

Foam Stabilizing Effect on Frozen egg white

Egg white about 340g was strained through confectionery sieve to give uniform liquid white egg, poured into stainless bowl (opening diameter: 21cm) and heated over water bath at 40°C. GPS preparation 2 (sugar alcohol composition of example 2) in an amount of 10% of the egg white was added thereto and the mixture was stirred gently to dissolve the composition without creating air bubbles. Thus obtained liquid egg white was poured in a plastic bag and sealed. The bag was stored at -30°C for 24 hours and then at -20°C for 37 days to give frozen egg white.

The frozen egg white prepared as above was deforested over 3 hours at 25°C in a temperature controlled chamber. Thus obtained thawed frozen egg white was beaten and the liquid drainage from the obtained foam, appearance (fineness of air bubbles) and firmness of the obtained foam were evaluated in the same manner as above. For comparison, egg white with no sweetener (comparative example 8) and that added with the same amount of granulated sugar (comparative example 9) were frozen and thawed in the same manner as above and evaluated.

Results of liquid drainage rate are shown in table 4 and the fineness and firmness are shown in table 5. The foam stabilizing effect of GPS preparation 2 was superior to that of granulated sugar.

TABLE 4

| Liquid drainage rate from foam prepared with deforested frozen egg white | | | |
|---|---|---|---|
| | Sweetener | liquid drainage rate (%) | |
| | | 30 min. | 60min. |
| Example 8 | GPS prep. 2 | 0.0 | 5.0 |
| Comp. Ex. 8 | none | 12.3 | 29.8 |
| Comp. Ex. 9 | granulated sugar | 6.0 | 22.0 |

TABLE 5

| Fineness and firmness of foam prepared with thawed frozen egg white | | | | | |
|---|---|---|---|---|---|
| | | fineness | | firmness | |
| | Sweetener | 30 min | 60 min | 30 min | 60 min |
| Example 8 | GPS prep. 2 | ○ | Δ | ○ | ○ |
| Comp. Ex. 8 | - | × | × | Δ | × |
| Comp. Ex. 9 | granulated sugar | × | × | × | × |

Example 9 and Comparative Example 10

Egg white foam was prepared according to the same manner as Examples 1-4 except for the ratio of GPS preparation 2 to egg white was increased to 100%. The liquid drainage and appearance were evaluated at 1, 2, 3, and 4.5 hours after the completion of beating. In comparative example, the same amount of granulated sugar was added to the egg white.

Results are shown in Table 6. By increasing amount of the sugar alcohol of the present invention, no liquid drainage was observed more than 2 hours. The liquid drainage rate at 3 and 4.5 hours were apparently lower in the example 9 than the comparative example 10. These results exhibit that the sugar alcohol composition of the present invention is more effective than granulated sugar, a most conventional sweetener, even if the added amount is increased.

TABLE 6

| Liquid Drainage Rate | | | | | |
|---|---|---|---|---|---|
| | Sweetener | Liquid drainage Rate (%) | | | |
| | | 1 hr | 2 hr | 3hr. | 4.5hr |
| Example 9 | GPS prep. 2 | 0.0 | 0.0 | 9.5 | 28.1 |
| Comp . Ex. 10 | granulated sugar | 0.01 | 0.0 | 17.2 | 38.8 |

Examples 10-12 and Comparative Example 11

Baked Meringue I

Egg white about 35g was put in a stainless bowl (opening diameter: 15cm). Granulated sugar and/or GPS preparation 2 were added so that the ratio of total amount of the sweeteners to egg white was 200%. The mixture was beaten for 1 minute and 30 seconds over water bath at 60°C (the mixture was about 50°C) and then at room temperature (the mixture was about 33°C) for 3 minutes and 30 seconds with the electric mixer (#MK-H3, Matsushita Electric Industries Co., Ltd. Osaka, Japan) to give egg white foam or meringue. The obtained meringue was put in a pastry bag and squeezed out to give pieces about 2 cm in bottom diameter. The meringue was then baked at 80°C for 5 hours in the oven to give baked meringue.

The sweeteners used in the examples 10-12 were mixture of the GPS preparation 2 and granulated sugar. The proportion of GPS preparation 2 in the total sweetener was 100%, 17% and 10% respectively. In comparative example 11, granulated sugar was added as the sole sweetener. The appearance of the baked meringue, i.e. cracking and liquid drainage, was observed. The "liquid drainage" in this study means liquid drainage occurred during the baking process and observed after baking as solidified liquid.

Results are shown in Table 7. In examples 10, 11 and 12, no cracking and no liquid drainage were observed exhibiting that the meringue was kept stably during the baking process. Contrary, cracks and liquid drainage were observed in the baked meringue of comparative example 11 containing granular sugar as the sole sweetener.

TABLE 7

| Evaluation of Baked Meringue I | | | | |
|---|---|---|---|---|
| | Proportion of GPS prep. 2 in the sweeteners (%) | Ratio of GPS prep.2 to egg white (%) | cracking | liquid drainage |
| Example 10 | 100 | 200 | no | no |
| Example 11 | 17 | 34 | no | no |
| Example 12 | 10 | 20 | no | no |
| Comp. Ex. 11 | 0 | 0 | yes | no |

Examples 13-15 and Comparative Example 12

Baked Meringue II

Baked meringue was prepared according to the same manner as Examples 10-12 except for the squeezed meringue was stood for 1 hour at room temperature before baking. The proportion of GPS preparation 2 in the sweeteners used in Examples 13-15 was 100%, 17% and 10% respectively. In comparative example 12, granulated sugar was used as the sole sweetener.

The results are shown in Table 8. In the examples 13, 14 and 15, no cracking and no drainage were observed and the appearance of the baked meringue was similar to those of Examples 10-12, or those prepared without the one hour standing before baking. To the contrarily, in the baked meringue of comparative example 12, large cracks and coagulated liquid exuded from the cracks were observed exhibiting that the one hour standing at the room temperature further deteriorated the structure of meringue.

TABLE 8

| Evaluation of Baked Meringue II | | | | |
|---|---|---|---|---|
| | Proportion of GPS prep. 2 in the sweeteners (%) | Ratio of GPS prep.2 to egg white (%) | cracking | Liquid drainage |
| Example 13 | 100 | 200 | no | no |
| Example 14 | 17 | 34 | no | no |
| Example 15 | 10 | 20 | no | no |
| Comp. Ex. 12 | 0 | 0 | yes | yes |

Examples 16 and 17 and Comparative Example 13

Chiffon Cake I

Liquid egg yolk 111.6g was warmed to room temperature and beaten for 1 minute with the electric mixer (#MK-H3, Matsushita Electric Industries Co., Ltd. Osaka, Japan), sweetener 48g was added thereto and the mixture was beaten further 6 minutes. The mixture was added with salad oil 78g gradually over 3 minutes while beating and beaten further 1 minute, and then the obtained mixture was added with water 78g and stirred manually for 1 minute. Sifted soft flour 120g was folded into the mixture and well blended manually, and then, beaten for 40 seconds with the electric mixer to give dough A.

Egg white 318g was kept over iced bath and beaten for 4 minutes with the electric mixer. Sweetener 36g was added thereto and the mixture was beaten for 2 minutes, then added with further sweetener 36g and beaten until the density was in the range of 0.19-0.21 to give meringue.

Thus obtained meringue 357.5g was added to the dough A 399.3g in two batches and blended well with plastic spatula to give dough B. The density of dough B was adjusted in the range of 0.34-0.36.

The dough B was poured in a Chiffon cake mold (diameter: 21cm, coated with fluoropolymer), tapped the mold by falling it from 10cm height for 10 times and then baked in the oven (#RE-F1, Sharp Corporation, Tokyo, Japan) at 170°C for 55 minutes. The baked cake was turned upside down, left to cool at room temperature, and unmolded to give chiffon cake.

Sweeteners used in these examples and comparative example were granulated sugar and/or GPS preparation 1, and the proportions of the GPS preparation 1 in total sweeteners were 100% and 50% for the examples 16 and 17 respectively. In the comparative examples, granulated sugar was used as the sole sweetener. The appearance of the baked chiffon cake, i.e. collapses on the bottom surface and constriction in the side body, were observed.

The density of the dough was determined by pouring the sample dough into a plastic container of 9 cm in diameter and 241.7 ml in volume, leveling the surface, weighting the content and dividing the weight by the volume to give relative density.

Results are shown in Table 9. Chiffon cakes of examples 16 and 17 were in favorable shape without collapse or constriction while the cake of comparative example 13, prepared with granulated sugar as the sole sweetener, had collapses on the bottom and constriction in the side and had less commercial value.

TABLE 9

| Evaluation of Chiffon Cakes | | | | |
|---|---|---|---|---|
| | proportion of GPS prep. 1 in the sweeteners (%) | ratio of GPS prep. 1 to egg white (%) | collapse on the bottom | constriction on the side |
| Example 16 | 100 | 23 | no | no |
| Example 17 | 50 | 11 | no | no |
| Com. Ex. 13 | 0 | 0 | yes | yes |

Example 18 and Comparative Example 14

Foam Stabilizing Effect on Whole eggs

Foam stabilizing effect of the GPS preparation 2 and granulated sugar on liquid whole eggs were evaluated.

Method

Liquid whole egg about 55g, i.e. one whole fresh L-size hen egg, was put into a stainless bowl (opening diameter: 21cm) and heated to 33°C over 40°C water bath. GPS preparation 2 or granulated sugar in an amount of 25% of the liquid egg was added and the mixture was beaten for 2.5 minutes with the electric mixer (#MK-H3, Matsushita Electric Industries Co., Ltd. Osaka, Japan). About 80 ml of the whipped whole egg was gently poured into a 100ml graded cylinder and the precise sample volume was determined. The cylinder was stood still at 25°C and the volume of the lower liquid phase, i.e. the volume of liquid drainage, was measured every 30 minutes. The liquid drainage rate was determined by the formula:

$$\text{Liquid Drainage Rate(\%)} = (\text{liquid drainage volume/sample volume}) \times 100$$

Result

Results are shown in Table 10. The liquid drainage rate of Example 18 was lower than that of comparative example 14. These results exhibit that the sugar alcohol composition of the present invention is effective to stabilize whole egg foam.

TABLE 10

| Liquid Drainage from whole eggs | | | |
|---|---|---|---|
| | | Liquid Drainage Rate (%) | |
| | | 30 min. | 60 min. |
| Example 18 | GPS prep. 2 | 1 | 6 |
| Example 14 | Granulated sugar | 5 | 11 |

Examples 19, 20 and Comparative Example 15

Manufacture of Sponge Cake

Sponge cake dough was prepared using the ingredients shown in table 11 below. Fresh whole eggs were put in a bowl over a water bath at 40°C to heat the eggs approximately at 37°C. The eggs were beaten for 30 seconds with the electric mixer (#MK-H3, Matsushita Electric Industries Co., Ltd. Osaka, Japan), sweeteners were added to the egg and the mixture was further beaten until the relative density reaches in the range of 0.26-0.27. Sifted soft flour was added to the mixture in three batches and worked with plastic spatula to fold the flour into the mixture. The relative density of the resulting dough was within the range of 0.44-0.45. Immediately after the preparation, each of the dough was poured in a cake mold and baked in the oven (#RE-F1, Sharp Corporation, Tokyo, Japan) at 170°C for 30 minutes to give sponge cake. The relative density of the dough was determined by pouring the sample into a plastic container of 9 cm in diameter and 241.7 ml in volume, leveling the surface, weighting the content and dividing the weight by the volume to give the relative density.

In the examples 19 and 20, 25% of GPS preparation 1 and GPS preparation 3 were used respectively in combination with 75 % of white superior soft sugar (Shin Mitsui Sugar Co., Ltd Tokyo, Japan). In the comparative example 15, white superior soft sugar was used as the sole sweetener.

TABLE 11

| Sponge Cake Ingredient | | | | Comp. Ex. |
|---|---|---|---|---|
| | | Example | | |
| | | 19 | 20 | 15 |
| Ingredient (%) | soft flour | 30 | 30 | 30 |
| | whole egg | 46 | 46 | 46 |
| | white superior soft sugar | 18 | 18 | 24 |
| | sugar alcohol composition | 6 | 6 | 0 |
| sweeteners | | GPS prep. 1/ sucrose | GPS prep. 3/ sucrose | sucrose |
| Proportion of the sugar alcs. in the sweeteners (%) | | 25 | 25 | 0 |
| ratio of the sugar alcohol composition to whole eggs (%) | | 13 | 13 | 0 |

Foam-Stability of the Sponge Cake Dough 1

Stability of dough density

Method

Change of the relative density with time was observed to determine foam stability of the sponge cake dough of the examples 19 and 20, and comparative example 15. Smaller change of the relative density means higher foam-stability. The relative density of the respective dough obtained in the examples and comparative examples was determined immediately after the preparation, and at 1-hour and 3-hours after the preparation. The dough was put in a stainless bowl, sealed with plastic wrap, and left to stand at 25 °C for 1 and 3 hours before the measurement.

Result

Results are shown in table 12. The relative densities of examples 19 and 20 were kept relatively low and stable than that of comparative example 15.

TABLE 12

| Foam-stability of the Sponge Cake Dough | | Example | | Comp. example |
|---|---|---|---|---|
| | | 19 | 20 | 15 |
| Relative density density of the dough | immediately after the preparation | 0.44 | 0.44 | 0.44 |
| | after 1 hour | 0.45 | 0.47 | 0.49 |
| | after 3 hour | 0.50 | 0.51 | 0.53 |

Foam-Stability of the Sponge Cake Dough 2

Stability of cake volumes

Sponge cake dough of examples 19, 20 and comparative example 15 immediately after the preparation, and that after stood for 3 hours at 25°C were baked at 170°C for 30 minutes respectively. Volume of thus obtained cakes were measured and compared to determine the volume-keeping rate. The bigger volume-keeping rate means the higher stability of the dough.

The volume of the baked sponge cake was measured with millet seeds. Firstly, a container larger than the respective sponge cakes was filled with millet seeds and leveled over the surface. The volume of millet seeds larger than the sponge cake were removed from the container, the sponge cake sealed with plastic wrap was put in the container, then the remaining gaps were filled with the millet seeds once removed from the container. After leveled over the surface, volume of the millet seeds outside the container was determined by means of graduated cylinder to give the volume of the sponge cake. The volume keeping rate of sponge cake was determined by the formula:

Volume keeping rate (%) = (volume of the cake baked after 3 hour stood of the dough)/(volume of the cake baked immediately after preparation of the dough) X 100.

Result

As shown in table 13 below, sponge cakes of examples 19 and 20 exhibited superior volume-keeping rate than that of comparative example 15, which was prepared by using sucrose as the sole sweetener.

TABLE 13

| Foam stability of the sponge cake dough | Example | | Comp. Example |
|---|---|---|---|
| | 19 | 20 | 15 |
| Volume keeping rate of the baked cake (%) | 80 | 87 | 74 |

**Claims**

1. A sugar alcohol composition for the use of stabilizing egg foam of aerated egg, comprising 55-100 wt% of α-D-glucopyranosyl-1,6-sorbitol on a dry weight basis.

2. The composition of Claim 1, further comprising 45-0 wt% of a compound selected from the group consisting of α-D-glucopyranosyl-1,1-mannitol, α-D-glucopyranosyl-1,1-sorbitol and a mixture thereof on a dry weight basis.

3. The composition of Claim 1 or 2, which is to be used for egg white or whole egg.

**4.** An egg product, comprising: eggs and the composition of any one of Claims 1-3.

**5.** The egg product of Claim 4, wherein the amount of the composition is 1-300 wt% of the wet amount of the eggs.

**6.** The egg product of Claim 4 or 5, wherein the eggs are egg white or whole egg.

**7.** The egg product of any one of Claims 4-6, wherein the product is liquid egg product.

**8.** The egg product of any one of Claims 4-6, wherein the product is frozen egg product.

**9.** The egg product of any one of Claims 4-6, wherein the product is dried egg product.

**10.** An egg mixture for an aerated food product which comprises the egg product of any one of Claims 4-9.

**11.** The egg mixture of Claim 10, further comprising a grain powder.

**12.** An aerated food product manufactured with the egg mixture of any one of Claims 10-12.

**13.** A method for manufacturing aerated egg product, comprising: providing liquid egg admixed with a sugar alcohol composition of any one of Claims 1-3, and beating liquid egg.

**14.** The method of Claim 13, wherein the liquid egg is egg white or whole egg.

**15.** The method of Claim 13 or 14, wherein the amount of the sugar alcohol composition is 1-300 wt% of wet amount of the liquid egg.

**16.** A method for preparing an aerated food product, which comprising the step of: providing aerated egg mixture comprising liquid egg and the sugar alcohol composition of any one of Claims 1-3.

**17.** The method of Claim 16, wherein the aerated egg mixture further comprises a grain powder.

**18.** The method of Claim 16, wherein the liquid egg is egg white or whole egg.

**19.** The method of any one of Claims 16-18, wherein the amount of the sugar alcohol composition is 1-300 wt% of wet amount of the liquid egg.

**20.** The method of any one of Claims 16-19, further comprising baking the aerated egg mixture.

**European Patent Office**

## EUROPEAN SEARCH REPORT

Application Number

EP 04 00 1117

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 1 378 168 A (UENO SEIYAKU OYO KENKYUJO KK) 7 January 2004 (2004-01-07) * paragraph [0006] - paragraph [0013]; claims 1-6; examples 1-5; tables 1,2,4,5 * --- | 1-20 | A23L1/09 A23L1/32 A23P1/16 A21D13/08 A21D2/18 |
| X | DE 195 32 396 A (SUEDZUCKER AG) 6 March 1997 (1997-03-06) * claims 14,16,19; example 1 * --- | 1-3 | |
| X | WO 01/15545 A (WRIGLEY W M JUN CO) 8 March 2001 (2001-03-08) * page 4, line 28 - page 5, line 6 * --- | 1-3 | |
| X | WO 97/08958 A (RAPP KNUT M ;SUEDZUCKER AG (DE); WILLIBALD ETTLE INGRID (DE)) 13 March 1997 (1997-03-13) * claim 1; examples 1,4; table 1 * --- | 1-3 | |
| A | DE 44 22 008 A (SCHOELLER LEBENSMITTEL) 5 January 1995 (1995-01-05) * the whole document * ----- | 1-20 | TECHNICAL FIELDS SEARCHED (Int.Cl.7) A23L A23P A21D |

The present search report has been drawn up for all claims

| Place of search | Date of completion of the search | Examiner |
|---|---|---|
| MUNICH | 13 May 2004 | Muller, I |

## ANNEX TO THE EUROPEAN SEARCH REPORT
## ON EUROPEAN PATENT APPLICATION NO.

EP 04 00 1117

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2004

| Patent document cited in search report | | Publication date | Patent family member(s) | | Publication date |
|---|---|---|---|---|---|
| EP 1378168 | A | 07-01-2004 | JP | 2004033108 A | 05-02-2004 |
| | | | EP | 1378168 A1 | 07-01-2004 |
| | | | US | 2004067295 A1 | 08-04-2004 |
| DE 19532396 | A | 06-03-1997 | US | 6548095 B1 | 15-04-2003 |
| | | | DE | 19532396 A1 | 06-03-1997 |
| | | | AT | 207305 T | 15-11-2001 |
| | | | AU | 705600 B2 | 27-05-1999 |
| | | | AU | 6928296 A | 27-03-1997 |
| | | | BR | 9610354 A | 06-07-1999 |
| | | | CA | 2230682 A1 | 13-03-1997 |
| | | | DE | 19549645 C2 | 05-12-2002 |
| | | | DE | 59608024 D1 | 29-11-2001 |
| | | | DK | 847242 T3 | 18-02-2002 |
| | | | WO | 9708958 A1 | 13-03-1997 |
| | | | EP | 1013175 A1 | 28-06-2000 |
| | | | EP | 0847242 A1 | 17-06-1998 |
| | | | ES | 2164918 T3 | 01-03-2002 |
| | | | IL | 123494 A | 19-03-2001 |
| | | | IL | 137558 A | 14-06-2001 |
| | | | IL | 137560 A | 08-08-2001 |
| | | | JP | 11507243 T | 29-06-1999 |
| | | | JP | 2000342185 A | 12-12-2000 |
| | | | JP | 3336590 B2 | 21-10-2002 |
| | | | JP | 2000312559 A | 14-11-2000 |
| | | | JP | 2000342200 A | 12-12-2000 |
| | | | NZ | 316930 A | 29-07-1999 |
| | | | PT | 847242 T | 29-04-2002 |
| | | | RU | 2153808 C2 | 10-08-2000 |
| | | | US | 6555146 B1 | 29-04-2003 |
| | | | US | 6562392 B1 | 13-05-2003 |
| | | | US | 2002028276 A1 | 07-03-2002 |
| | | | US | 2003175396 A1 | 18-09-2003 |
| WO 0115545 | A | 08-03-2001 | AU | 5447200 A | 26-03-2001 |
| | | | BR | 0013507 A | 02-07-2002 |
| | | | CA | 2381810 A1 | 08-03-2001 |
| | | | CN | 1136783 C | 04-02-2004 |
| | | | EP | 1213969 A1 | 19-06-2002 |
| | | | JP | 2003508039 T | 04-03-2003 |
| | | | WO | 0115545 A1 | 08-03-2001 |
| | | | US | 6444240 B1 | 03-09-2002 |
| WO 9708958 | A | 13-03-1997 | DE | 19532396 A1 | 06-03-1997 |
| | | | AT | 207305 T | 15-11-2001 |
| | | | AU | 705600 B2 | 27-05-1999 |

EPO FORM P0459

For more details about this annex : see Official Journal of the European Patent Office, No. 12/82

**EP 1 438 902 A1**

## ANNEX TO THE EUROPEAN SEARCH REPORT
## ON EUROPEAN PATENT APPLICATION NO.

EP 04 00 1117

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2004

| Patent document cited in search report | | | Publication date | | Patent family member(s) | | Publication date |
|---|---|---|---|---|---|---|---|
| WO 9708958 | A | | | AU | 6928296 | A | 27-03-1997 |
| | | | | BR | 9610354 | A | 06-07-1999 |
| | | | | CA | 2230682 | A1 | 13-03-1997 |
| | | | | DE | 19549645 | C2 | 05-12-2002 |
| | | | | DE | 59608024 | D1 | 29-11-2001 |
| | | | | DK | 847242 | T3 | 18-02-2002 |
| | | | | WO | 9708958 | A1 | 13-03-1997 |
| | | | | EP | 1013175 | A1 | 28-06-2000 |
| | | | | EP | 0847242 | A1 | 17-06-1998 |
| | | | | ES | 2164918 | T3 | 01-03-2002 |
| | | | | IL | 123494 | A | 19-03-2001 |
| | | | | IL | 137558 | A | 14-06-2001 |
| | | | | IL | 137560 | A | 08-08-2001 |
| | | | | JP | 11507243 | T | 29-06-1999 |
| | | | | JP | 2000342185 | A | 12-12-2000 |
| | | | | JP | 3336590 | B2 | 21-10-2002 |
| | | | | JP | 2000312559 | A | 14-11-2000 |
| | | | | JP | 2000342200 | A | 12-12-2000 |
| | | | | NZ | 316930 | A | 29-07-1999 |
| | | | | PT | 847242 | T | 29-04-2002 |
| | | | | RU | 2153808 | C2 | 10-08-2000 |
| | | | | US | 6555146 | B1 | 29-04-2003 |
| | | | | US | 6562392 | B1 | 13-05-2003 |
| | | | | US | 2002028276 | A1 | 07-03-2002 |
| DE 4422008 | A | 05-01-1995 | | AT | 401847 | B | 27-12-1996 |
| | | | | AT | 124793 | A | 15-05-1996 |
| | | | | DE | 4422008 | A1 | 05-01-1995 |

EPO FORM P0459

For more details about this annex : see Official Journal of the European Patent Office, No. 12/82

16